# EUROPEAN PATENT APPLICATION

(11) **EP 4 474 777 A1**
(43) Date of publication of application: **11.12.2024**
(21) Application number: 23178128.7
(22) Date of filing: 07.06.2023
(51) Int. Cl.: G01F 23/263, G01N 35/10

(54) **LIQUID MANIPULATION DEVICE AND METHOD**

(71) Applicant: LUMICKS DSM Holding B.V., 1105 AG Amsterdam (NL)
(72) Inventor: KÜHNLEIN, Alexandra, 1105 AG AMSTERDAM (NL); BECKER, René, 1105 AG AMSTERDAM (NL); VERHEIJEN, Daan, 1105 AG AMSTERDAM (NL); FEDOTOV, Vitalij Sergeevic, 1105 AG AMSTERDAM (NL)
(74) Representative: De Vries & Metman

(57) **Abstract**

A method for liquid manipulation is provided, which comprises:
providing a microcontainer (3) for holding an amount of liquid (7);
providing an amount of liquid (7) in the microcontainer (3) via a liquid conduit (5) arranged in the microcontainer (3), wherein the liquid conduit (5) comprises a first electrode (9) forming an inner electrode;
providing the microcontainer (3) with a second electrode (11) forming an outer electrode laterally adjacent to the microcontainer (3);
wherein the method further comprises determining one or more electrical capacitance values between the first and second electrodes; and
determining a liquid level (L) in the microcontainer (3) and/or a variation of a liquid level (L) in the microcontainer (3) based on the one or more determined electrical capacitance values.

An associated system is also provided.

## Description

### TECHNICAL FIELD

The present disclosure relates to liquid manipulation, in particular determining a liquid level, and/or changes thereof, in a microcontainer.

### BACKGROUND

Many (bio-)chemical methods, like assays and experiments, involve liquid manipulation. In such cases, accurate determination and/or control over liquid amounts in Eppendorf tubes, test tubes and similar microcontainers may be required. Reliable detection of liquid volumes in the range of 1-10 millilitres is already difficult, in a range of 10-1000 microliters this is very hard with accuracies of few microliters. Moreover, any test and measurement system should preferably be "bio-compatible", i.e. not interact or interfere with biological samples and have a small size and be substantially independent on the composition of the liquid.

Sensors and/or methods based on optical, ultrasonic, float, microwave/radar, conductive or resistance-based measurements generally suffer from one or more of poor sensitivity for minute volume changes, large size, procurement and/or maintenance costs, detection dependency of properties of the liquid and/or substances in that (e.g. density, composition, electrical conductance, opacity, index of refraction, etc.), affecting properties of the liquids and/or substances in that (e.g. electrophoresis, electrolysis, heating, agitation, etc.).

Therefore, there is a continuous desire for improvements in associated detection systems and methods.

### SUMMARY

Herewith are provided, in at least some aspects, a liquid manipulation device and accompanying method.

A provided method for liquid manipulation comprises:
providing a microcontainer for holding an amount of liquid, such as a test tube or an Eppendorf tube;
providing an amount of liquid in the microcontainer via a liquid conduit arranged in the microcontainer, wherein the liquid conduit comprises a first electrode forming an inner electrode;
providing the microcontainer with a second electrode forming an outer electrode laterally adjacent to the microcontainer;
wherein the method further comprises determining one or more electrical capacitance values between the first and second electrodes; and determining a liquid level in the microcontainer and/or a variation of a liquid level in the microcontainer based on the one or more determined electrical capacitance values.

The method allows for high resolution and reliable measurement of small volumes of liquid, in particular volumes associated with microfluidic assays. The method employs using the difference in contribution of gas, e.g. ambient air and liquid to a total capacitance due to differences in dielectric constants of the respective substances (gas and liquid).

It is noted that capacitance measurements allow for use with electrically insulating substances such as the liquid and/or one or more material(s) of the microcontainer. The outer electrode may be provided as part of the microcontainer, as (part of) a device adjacent the microcontainer such as a sticker on, the microcontainer, and/or in, or as, part of a microcontainer holder; e.g. the method may comprise arranging the microcontainer in a microcontainer holder providing the outer electrode. Such technique proves to be quickly and/or reliably applicable with diverse liquids and usable in various conditions such as with heated and/or chilled liquids and/or with temperature control. The method may be performed with plural microcontainers in parallel, as explained below.

A microcontainer as understood in the present disclosure has a volume of about 10 milliliter or less, preferably 7,5 ml, 5,0 ml, 2,5 ml or less, such as 1,5 ml or 1,0 ml (1,0 ml = 1000 microliter). The volume may be metered which may be indicated on the microcontainer; the microcontainer may provide a comparably smaller head space above (a liquid level of a liquid at) the metered volume. Such microcontainers are commonly used in laboratories for assays in fields of (micro-) biology, (bio-) chemistry and medicine. Typical microcontainer embodiments are test tubes, ampoules, vials, microtubes Eppendorf tubes and wells in multiwell plates.

The holder and the second electrode may be integrated, e.g. the holder being electrically conductive.

The present method and system at least allows for reliably detecting the liquid level both when the first electrode is at least partly immersed in the liquid and when it is not immersed in the liquid.

Here, "laterally adjacent" is intended to mean aside, relative to a normal to the liquid level and/or relative to an axis defined by the liquid conduit and/or an axis defined by the second electrode, and relating to a normal use orientation of the microcontainer.

The method may comprise immersing at least part of the first electrode in the amount of liquid through the liquid level.

Then, determining one or more electrical capacitance values between the first and second electrodes and determining a liquid level in the microcontainer and/or a variation of a liquid level in the microcontainer based on the one or more electrical capacitance values may comprise determining the one or more capacitance values as resultant capacitance values of a first capacitance associated with a first inner electrode portion that is not immersed in the liquid and a second capacitance of a second inner electrode portion that is immersed in the liquid.

Varying an amount of liquid in the microcontainer may comprise adding and/or removing one or more amounts of liquids to/from the microcontainer; and/or may comprise adding and/or removing several amounts of liquid consecutively (e.g. add a first liquid, optionally then (partially) remove it, add another liquid, etc. etc.). Adding plural liquids to the microcontainer may e.g. allow for causing mixing and/or reaction of (substances in) the liquids.

The method may comprise controlling a liquid level and/or a variation of a liquid level in the microcontainer on the basis of the one or more electrical capacitance values. Thus, detailed control over the amount of liquid may be provided, e.g. for control of an amount of liquid and/or a rate of filling and/or emptying the microcontainer. Also, air bubbles and/or minimum amount of liquid (such as a liquid level height) may be controlled. E.g. by continuous monitoring of the liquid level, it can be prevented that the fluid level drops below a certain level and/or that air is introduced into the liquid conduit and the system.

Varying the amount of liquid in the microcontainer may comprise controlling a gas pressure in the microcontainer.

Thus, an amount of liquid in the microcontainer may be varied via the inner electrode. This allows for a simple and/or cost effective method, e.g. one or more obviating provision and/or use of further apparel, requiring little space which may be relevant for small microcontainers, reducing time and/or effort positioning a fluid manipulation device, etc. Also or alternatively a system for use in the method may accordingly be simple and/or cost effective. The inner electrode may comprise a hollow needle and/or pipette tip providing the conduit, allowing the passage of a liquid through it. Such needle and/or pipette tip may be used to penetrate a closure of the microcontainer. The needle or pipette tip may be metallic and/or be insulating but provided with an electrical conductive portion such as a metallic portion and/or layer portion. Such electrical conductive portion may be in contact with the liquid or not; one or more portions of the electrode may be electrically insulated.

Use of a needle and/or tip which doubles at least in part as an electrode may facilitate handling and it may in particular be advantageous for automated systems for microcontainer filling and/or substance testing.

The method may be integrated in existing methods and/or be performed using existing liquid manipulation systems with relatively little system modification, e.g. microcontainer filling systems, pipetting robots, etc.

The method may comprise arranging the inner electrode in the microcontainer substantially equidistant from opposing microcontainer wall portions; preferably, the inner electrode is arranged on an axis of symmetry of the microcontainer (e.g. being arranged on a central axis of a cylindrically symmetric microcontainer). Also or alternatively, the second electrode may be arranged around the microcontainer, preferably such that the second electrode substantially fully encircles the microcontainer ('encircling' here referring to surrounding in two dimensions, irrespective of a circular or non-circular shape). The first and second electrodes may be arranged coaxially. Any of these, and in particular in combination may improve an accuracy and/or a signal to noise ratio of the capacitance determination, e.g. by shielding the system from external disturbances. E.g. this may increase the reliability of the method by equalizing thickness of a layer of liquid in the microcontainer around the inner electrode, in particular in a microcontainer being substantially circularly symmetric about the electrode and/or an axis of symmetry of the microcontainer.

The method may also comprise determining the presence of the microcontainer e.g. presence in a holder, and/or one or more properties of the microcontainer, optionally prior to the step of determining one or more electrical capacitance values between the inner and outer electrodes. This could be achieved using a sensor-like device or module. This method may provide a safeguard, e.g. preventing the execution of one or more steps of the method when no microcontainer is present, hence preventing possible damage to equipment and/or spilling of liquids and/or unwanted introduction of air bubbles. Determining one or more properties of the microcontainer may comprise one or more of (correct) position in a holder, identifying the microcontainer, determining one or more of a shape, a size of the microcontainer, a material of the microcontainer, and contents of the microcontainer (liquid and/or non-liquid), e.g. one or more substances to be dissolved and/or to be treated with particular care and/or conditions. For such determination, the microcontainer may be provided with one or more machine-readable indicia, such as optically and/or otherwise electromagnetically readable indicia (e.g. one or more of bar code, QR code, alphanumeric code, magnetic strip, memory chip, etc.). Detection of the presence/absence of a microcontainer may also be achieved using a simple electromechanical switch (e.g. a switch that is depressed when a microcontainer is correctly placed in the holder). An alert may be provided based on the one or more electrical capacitance values.

The method may comprise moving an amount of liquid from the microcontainer into and/or through a sample holder such as a microfluidic chip.

The method may comprise providing a sample holder such as a microfluidic chip, providing one or more amounts of liquid to the sample holder, possibly comprising flowing one or more amounts of liquid through the sample holder. At least one of the one or more amounts of liquid may be provided from the microcontainer via the conduit.

Substances in the microcontainer, the liquid and/or the sample holder may thus be studied and/or used to study another substance, alone and/or in combination. E.g., a microcontainer may comprise a first substance and the sample holder may comprise a second substance which may interact; such interaction may be a (bio-)chemical reaction and/or a biological reaction. Note that a substance in the microcontainer and/or the sample holder may comprise one or more biological substances such as bio-molecules, proteins, polypeptides, peptides, enzymes, DNA-molecules, RNA molecules, cells, viruses, bacteria, lipids, polysaccharides etc.

Also or alternatively, one or more of the liquids may comprise or be a cleaning liquid. Also or alternatively, one or more of the liquids may comprise or be a buffering liquid. Also or alternatively, one or more of the liquids may comprise or be water, such as deionized water.

For varying one or more amounts of one or more liquids in the microcontainer, more specifically when removing a liquid from the microcontainer, the microcontainer may be pressurized, thereby forcing the liquid out of the microcontainer. By controlling a gas pressure in the microcontainer a flow of the liquid may be controlled.

Any method embodiment may be performed in parallel in multiple microcontainers and/or be used for cleaning the microcontainer. The method may comprise controlling a temperature of at least one of the liquid and at least part of the microcontainer.

The method may comprise a sequence of steps comprising:
adding an amount of a first cleaning solution to the microcontainer;
removing the first cleaning solution from the microcontainer;
adding an amount of sample liquid to the microcontainer;
adding one or more amounts of one or more reactant to the microcontainer comprising the amount of sample liquid, forming a mixture;
removing the mixture from the microcontainer;
adding an amount of a second cleaning solution to the microcontainer; and
removing the second cleaning solution from the microcontainer.

This may allow for interactions of samples with one or more amounts of one or more reactants and also ensures clean operation.

The first cleaning solution may differ from the second cleaning solution or it may comprise at least part of, or be identical to, the second cleaning solution.

Any embodiment described above may comprise performing one or more method embodiments, in particular the respective method embodiment, on multiple microcontainers, preferably at least partly at a same time. Thus, such method may comprise providing plural microcontainers, providing each microcontainer with an outer electrode laterally adjacent to the respective microcontainer, arranging an inner electrode in each microcontainer, determining one or more electrical capacitance values between the respective inner and outer electrodes associated with respective microcontainers; and determining a filling level and/or a variation of a filling level of a liquid in the respective microcontainers based on the one or more electrical capacitance values determined for the respective microcontainer.

Associated with the preceding and any aspects and/or benefits thereof, herewith is provided a liquid manipulation system for performing any method embodiment provided herein.

E.g., a liquid manipulation system for performing any method embodiment provided herein comprises
a microcontainer holder for holding a microcontainer for holding an amount of liquid, such as a test tube or an Eppendorf tube;
a liquid conduit for varying an amount of liquid in a microcontainer, in particular a pipette and/or a needle allowing the passage of a liquid via the conduit, wherein the liquid conduit comprises a first electrode;
a second electrode, preferably arranged in or on the microcontainer holder;
the system being configured to arrange the liquid conduit in a microcontainer held in the microcontainer holder, and the second electrode laterally adjacent to the microcontainer, the first and second electrodes forming an inner electrode and, respectively, an outer electrode at a predetermined relative position;
the system further comprising a module configured to determine one or more electrical capacitance values between the first and second electrodes in at least the predetermined relative position; and
wherein the system is configured to determine a liquid level in the microcontainer and/or a variation of the liquid level in the microcontainer based on the one or more determined electrical capacitance values.

The liquid manipulation system may be configured for performance of the method in plural microcontainers, possibly at least partly simultaneous, e.g. comprising one or more microcontainer holders for holding plural microcontainers, and possibly comprising plural conduits with respective (first) electrodes associated with plural microcontainer holders, wherein the system is configured to determine a liquid level and/or a variation of the liquid level in each microcontainer based on one or more electrical capacitance values determined between the respective first and second electrodes in the predetermined relative position associated with, and possibly determined at least partly by, the respective microcontainer holders.

The liquid manipulation system may be configured to vary an amount of liquid in the microcontainer, in particular comprising fluid manipulation devices such as one or more conduits, valves, pumps, and possibly a controller for controlling one or more of the one or more valves and/or pumps.

Varying an amount of liquid in the microcontainer may comprise adding and/or removing one or more amounts of one or more liquids to/from the microcontainer. Adding plural liquids to the microcontainer may e.g. allow for causing mixing and/or reaction of (substances in) the liquids. One or more of the liquids may comprise a cleaning agent to clean the microcontainer and/or the liquid conduit comprising the first electrode between (use for) different liquids of other types.

With the system, detailed control over the amount of liquid may be provided, e.g. for control of an amount of liquid and/or a rate of filling and/or emptying the microcontainer.

Thus, the system may also be configured to vary the amount of liquid in the microcontainer.

In case of a system configured for liquid manipulation of plural microcontainers in parallel, fluid manipulation devices may be provided to vary the amount of liquid in one or more microcontainers individually and/or in plural microcontainers collectively.

At least part of the first electrode may be configured to be immersed in an amount of liquid in the microcontainer, facilitating level control.

The second electrode may be arranged in or on the microcontainer holder to encircle the microcontainer at least partly and preferably substantially fully.

The liquid manipulation system may be configured to position at least part of the first electrode in the microcontainer substantially equidistantly from opposing microcontainer wall portions and/or from opposing second electrode portions

The liquid manipulation system may be configured to position at least part of the first electrode in the microcontainer substantially coaxial with at least one of the second electrode and the microcontainer, the first electrode extending along a first electrode axis, the microcontainer extending along a microcontainer axis, and the second electrode extending along a second electrode axis.

The liquid manipulation device may also be configured to arrange the inner electrode substantially centrally with respect to the microcontainer. Substantially centrally may be defined as being substantially equidistant from all opposing wall sections of the microcontainer with respect to the inner electrode. Thus, reliability of the determined capacitance values may be increased, e.g. by ensuring an approximately equally thick layer of liquid around the inner electrode.

The liquid manipulation device may comprise a pressure manipulation module configured to control a pressure in the microcontainer for varying an amount of liquid in the microcontainer, e.g. adding and/or removing one or more amounts of one or more liquids to/from the microcontainer. The pressure may be an overpressure or an underpressure with respect to ambient pressure.

The liquid manipulation device may be configured to pressurize the microcontainer when varying one or more amounts of one or more liquids, more specifically when removing an amount of liquid from the microcontainer. E.g., the system may comprise one or more seals and/or a pressurising device. This way facilitates that liquid is forced out of the microcontainer. This may obviate a vacuum pump but rather allows a simpler pressurized air supply, making the device more cost efficient. Using elevated pressure to force the liquid out of the microcontainer through the liquid conduit instead of sucking fluid through the liquid conduit by applying vacuum on the other side also has the advantage that degassing or boiling of the liquid may be prevented, that any possible leaks in the system do not introduce air bubbles and that fluids may be driven at higher flow rates by increasing pressure to more than 1 bar above atmospheric pressures.

The liquid manipulation device may also be configured to determine the presence and/or one or more properties of a microcontainer in the holder. E.g. the liquid manipulation system may comprise a detector for determining presence and/or one or more properties of the microcontainer in the holder.

The liquid manipulation device may also comprise a controllable manifold module for controllably moving an amount of liquid from the microcontainer into and/or through a reservoir and/or a sample holder such as a microfluidic chip. This allows for additional equipment to more easily and more closely study the liquid from the microcontainer.

The liquid manipulation device may further comprise one or more of a cleaning station, a waste station, and
a sample holder station which may be provided with a sample object manipulation and/or detection system.

The liquid manipulation system may also comprise a controller configured to perform a sequence of steps comprising:
adding an amount of a first cleaning solution to the microcontainer;
removing the first cleaning solution from the microcontainer;
adding an amount of sample liquid to the microcontainer;
adding one or more amounts of one or more reactants to the microcontainer comprising the amount of sample liquid, forming a mixture;
removing the mixture from the microcontainer;
adding an amount of second cleaning solution to the microcontainer; and
removing the second cleaning solution from the microcontainer.

This method allows for interactions of samples with one or more amounts of one or more reactants and also ensures clean operation.

The first cleaning solution may comprise at least part of or be identical to the second cleaning solution.

### BRIEF DESCRIPTION OF THE DRAWINGS

The above-described aspects will hereafter be more explained with further details and benefits with reference to the drawings showing a number of embodiments by way of example.
Figs. 1-2 schematically indicate part of a liquid manipulation system;
Fig. 3 shows experimental results;
Fig. 4-5 indicate a liquid manipulation system and method steps;
Fig. 6-9 show parts of an embodiment.

### DETAILED DESCRIPTION OF EMBODIMENTS

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified. Further, elements that are at least substantially identical or that perform an at least substantially identical function are denoted by the same numeral, where helpful individualised with alphabetic suffixes.

Further, unless otherwise specified, terms like "detachable" and "removably connected" are intended to mean that respective parts may be disconnected essentially without damage or destruction of either part, e.g. excluding structures in which the parts are integral (e.g. welded or moulded as one piece), but including structures in which parts are attached by or as mated connectors, fasteners, releasable self-fastening features, etc. The verb "to facilitate" is intended to mean "to make easier and/or less complicated", rather than "to enable".

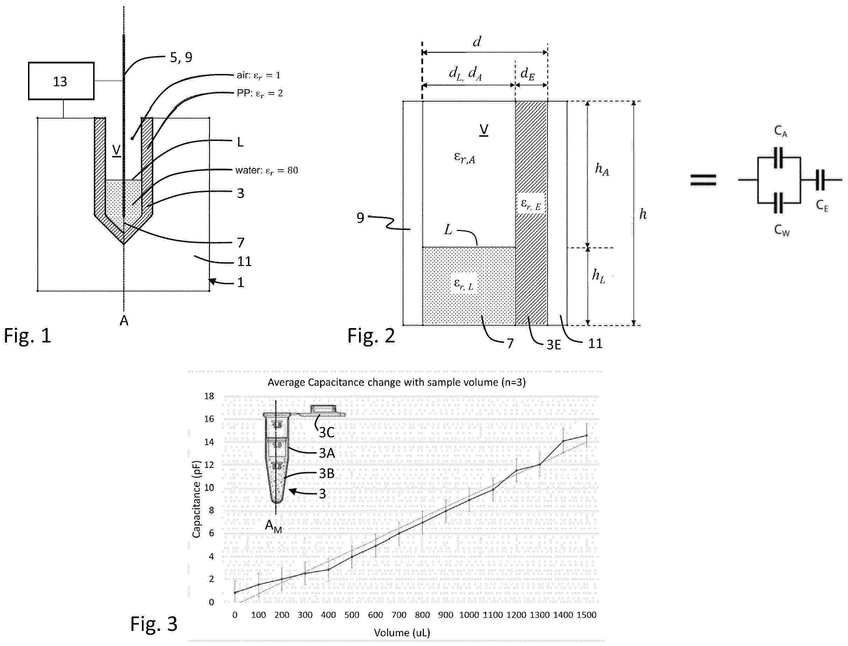

Figs. 1-2 indicate part of a liquid manipulation system provided herewith, and arranged for the method according to any one of the embodiments described herein.

The system comprises a microcontainer holder 1 for holding a microcontainer 3 for holding an amount of liquid, such as an Eppendorf tube. The holder 1 defines a position of the microcontainer 3.

The system also comprises a liquid conduit 5 for varying an amount of liquid 7 in the microcontainer 3. The conduit 5 here is optionally in the form of a hollow needle provided with an electrically conductive portion forming a first electrode 9, or: inner electrode. In particular, the conduit 5 may be formed as a conductive tube, e.g. a tube of a metal such as stainless steel. In another embodiment, not shown, the conduit may be formed as a nonconductive tube provided with a conductive mantle and/or coating.

The holder 1 may be formed as, or is provided with, a second electrode, or: outer electrode, laterally adjacent to the microcontainer 3, i.e. aside from the microcontainer 3 in a direction parallel to a (an expected) liquid level of a liquid in the microcontainer 3. Such second electrode may be provided as a conductive portion arranged in or on the holder 1. As a preferred option, and as shown, the holder 1 comprises or is a conductive body 11 accommodating the microcontainer 3, so that (at least part of) the holder forms the second electrode 11 itself. The holder 1 may preferably hold the microcontainer 3 in close physical contact, this may reduce distance and material between the microcontainer 3 and the electrode 11, e.g. reducing or preventing an air gap between the microcontainer 3 and the second electrode 11 which might affect the detection such as performance and/or accuracy thereof. The close physical contact may also improve temperature control of the microcontainer and substances in it by optional temperature control of the holder 1, e.g. by providing the holder with a heating and/or cooling device such as coolant ducts, heater fluid ducts, Peltier elements etc. (none shown)

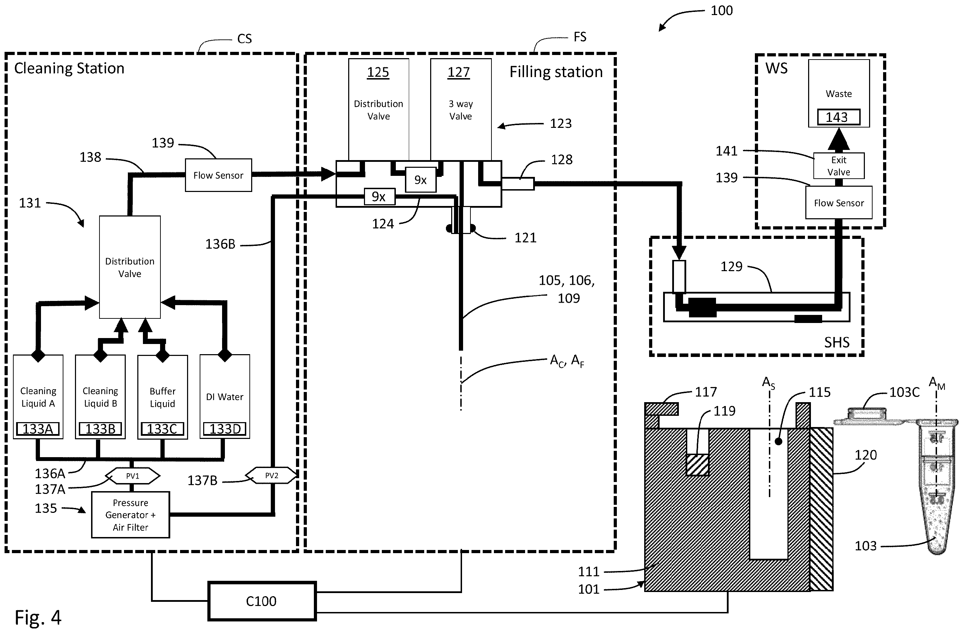

The microcontainer may have a cylindric and/or conic shape (e.g. an Eppendorf having a cylindric portion 3A with a tapering, e.g. conic, end portion 3B) extending about a microcontainer axis A_{M}. As also shown in Figs. 4-5, see below, the conduit 5 (105) and/or the first electrode 9 (109) may extend about a conduit axis A_{C} and a first electrode axis A_{F}, respectively, which may preferably coincide. The holder 1 (101) may define a second electrode axis As.

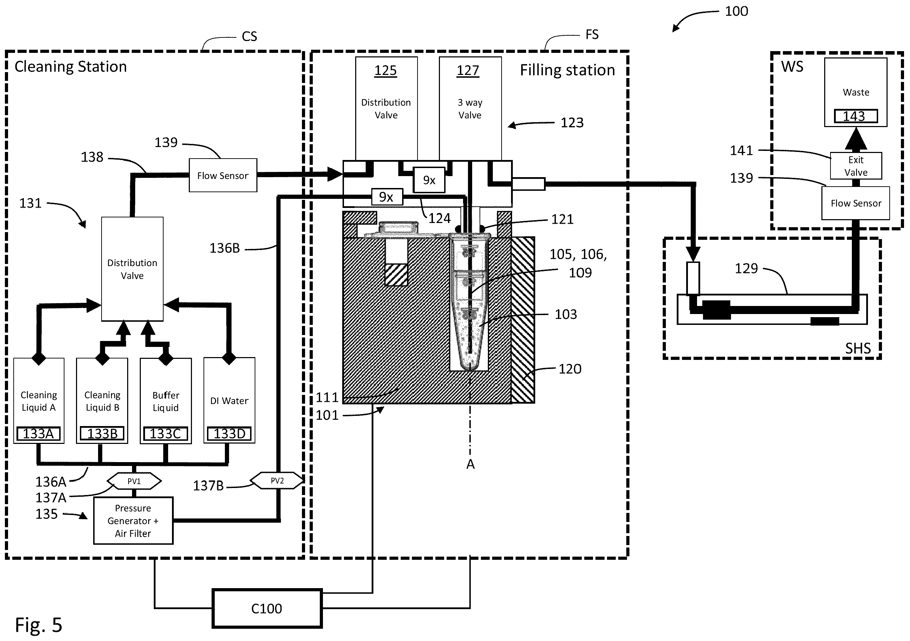

In use, the liquid conduit 5 is arranged in the microcontainer 3 for a height h. Preferably, the microcontainer, first and second electrodes are all arranged coaxially on an axis A as shown in Figs. 1 and 5 (see also below).

An amount of liquid 7 may be provided in or removed from the microcontainer 3 via the liquid conduit 5 to provide a liquid level L. The liquid conduit 5, and in particular the first electrode 9, preferably is partly immersed in the liquid 7, as shown, and preferably extends close to the bottom of the microcontainer 3.

Between the first electrode 9 and the second electrode 11 an electric voltage difference (preferably an alternating voltage ("AC voltage")) may be applied so that the electrodes and any dielectric media in between them form a capacitor of which an electric capacitance C_{T} can be determined. The capacitance value of the capacitance C_{T} depends on an effective relative dielectric constant ε_{r,T} of the dielectric media in a volume V between, and defined by, the electrodes 9, 11, which effective relative dielectric constant ε_{r,T} in turn depends on the values of the relative dielectric constants of each of the media and the respective amounts.

As indicated in Fig. 2, in the volume V,
the wall 3E of the microcontainer 3 provides a dielectric material of height h and thickness d_{E} and having relative dielectric constant ε_{r,E};
a first portion is determined by the liquid 7 (e.g. water) forming a dielectric material of thickness d_{L} and height h_{L} up to the liquid level L and having relative dielectric constant ε_{r,L};
a second portion is determined by gas (e.g. air) above the liquid level L forming a dielectric material of thickness d_{A} and height h_{A} (with h_{L} + h_{A} = h) and having relative dielectric constant ε_{r,A}, different from ε_{r,L}.

Thus, also indicated in Fig. 2, the capacitance C_{T} of the assembly of electrodes and dielectric material can then be approximated by considering the system as a circuit of two parallel capacitors Cw and C_{A,} in series with a third capacitor C_{E}: C_{T} ~ C_{E}(C_{W} + C_{A})/(C_{W} + C_{A} + C_{E}). Hence, since the microcontainer wall 3E is a constant, the total capacitance C_{T} varies with the amount of liquid (or: volume of liquid) in the microcontainer 3 and the resultant height of the liquid level L, or: the height of the liquid column h_{L}, thus with a filling ratio h_{L} /h. Therewith, the liquid level L, or at least variations thereof can be determined from a determination of the capacitance C_{T}. Note further that other constant system features may add to the capacitance C_{E} such as dielectric coatings on the first and/second electrodes, a contribution of a layer of air between the wall 3E of the microcontainer 3 and the electrode 11, etc.. Such constant factors may therefore have little to no effect on the detection and the present concepts.

For determining the electrical capacitance value C_{T} between the first and second electrodes 9, 11, a controller module 13 may be provided. The controller module 13 may be configured to determine the liquid level L in the microcontainer 3 and/or a variation of the liquid level L in the microcontainer 3 based on the one or more determined electrical capacitance values. The controller module 13 may also be configured to apply the voltage difference between the first and second electrodes 9, 11, e.g. as an alternating voltage of a predetermined and/or adjustable frequency. Suitable frequencies may depend on one or more of the media, in particular a composition of the liquid 7 and/or any matter in it. Determination of the capacitance C_{T} may involve, and benefit from, sweeping the frequency which may facilitate detection of artefacts (e.g. particular response of a medium to a particular frequency, droplets adhering to the microcontainer wall, etc) and/or improving accuracy of determined values of capacitance C_{T} and/or variations thereof.

Fig. 3 indicates a relation between capacitance values and filling volume of water in a standard Eppendorf tube (inset) with nominal containment volume of 1500 microliters, and air as gas above the liquid. The relative permittivity of air and water are 1 and 80, respectively. The measured relative permittivity of the volume filled with a mixture of air and water therefore is somewhere between 1 and 80. As indicated before, by determining the effective relative permittivity of the whole volume, the ratio between water and air in the volume can be determined, and therefore the amount of liquid (water) in the total volume. Such relative permittivities within the geometry of the system considered may result in a capacitance range of between 1 and 15 pF. Incidentally, this capacitance range lies in the same range as "capacitive touch" applications, and therefore there is a plethora of electronics (such as integrated circuits and/or devices) available on the market that can measure this range of capacitance (1-15 pF) with a high level of accuracy and precision, allowing reduction of costs.

In a capacitance range of about 3 - 10 pF corresponding to about 400 - 1100 microliters in the Eppendorf, a near perfect linear behaviour between the capacitance and the amount of liquid (i.e. corresponding to the liquid level in the microcontainer) is found.

For lower values a deviation is found probably related to the tapering portion 3B of the Eppendorf, resulting in a deviation of the ratio d_{L} / d with filling height and hence a nonlinear relation between liquid level height h_{L} and liquid volume V_{L} ∝ d_{L}² h_{L} (a Skilled Reader will realise that a formal calculation of actual volume in the microcontainer may also account for factors such as volume of the conduit 5 and possibly thickness of (or: thickness variation in) the microcontainer wall 3E). This can be accounted for in a more sophisticated calculation than used for the fit in the shown example. For capacitance values above 12 pF associated with liquid volumes of over 1100 microliters, determining capacitance values may have been affected by (uncontrolled position of) lid 3C attached to the Eppendorf's tube main body 3A in the test setup.

Figs. 4-5 indicate a liquid manipulation system 100 and method steps of use thereof. The system comprises a liquid control station or briefly: "filling station" FS, a cleaning station CS, a sample holder station SHS and a waste station WS which may be integrated with the cleaning station (not shown). An optional controller module C100 is connected to at least some of the stations, preferably all, for controlling operation of one or more portions of the respective stations.

Although for clarity in Figs. 4-5 only (features for) one microcontainer is (are) shown and discussed, the filling station may be similarly arranged for liquid control of plural, e.g. 9, microcontainers possibly at least partly in parallel (see also below); any number of microcontainers may be used, e.g. 2, 3, 4, 5, 6, 7, 8, 9, 10, 15, 20.

The system comprises, like Figs. 1-2, a microcontainer holder 101 for holding a microcontainer for holding an amount of liquid, such as an Eppendorf 103, in a recess 115 which defines a position of the microcontainer 103. The holder 101 is, as an option, formed as conductive body accommodating the microcontainer 103, so that the holder 101 forms a second electrode 111 itself. The holder 101 comprises an optional clamp 117 for controllably holding lid 103C of the Eppendorf 103 so as not to affect capacitance determination (Figs. 5-7) and/or to secure the Eppendorf. The holder 101 is provided with an optional microcontainer detector 119 for detecting at least one of presence of a microcontainer 103 in the holder 101, proper positioning of (part of) the microcontainer 103 such as the lid 103C, and one or more properties of the microcontainer 103 and/or contents thereof. For the latter, the microcontainer 103 and the detector 119 may be provided with indicia and, respectively, a reader for reading the indicia. The holder 101 is provided with an optional heating and/or cooling device 120 such as one or more Peltier elements.

The system 100 also comprises a liquid conduit 105 for varying an amount of liquid in the microcontainer 103. Again, the conduit 105 is optionally in the form of an at least partly electrically conductive hollow needle 106 for forming a first electrode 109 in the microcontainer 103 (Fig. 5).

The holder 101 and the conduit 105 are controllably movable relative to each other to arrange the conduit 105 in the microcontainer 103 (Figs. 4-5). The filling station FS comprises an optional seal 121 allowing pressurisation of the microcontainer 103 (see below).

For parallel use with plural microcontainers 103, each is accordingly provided with "its own" liquid conduit 105, and optionally, a pressure conduit 124 and/or seal 121.

The filling station FS comprises an optional controllable manifold module 123 for controllably moving, e.g. dispensing, amounts of liquid into and/or from one or more of the microcontainers 103 together or individually; for that the module 123 may comprise one or more controllable valves 125, 127 and/or pumps (although the latter may be preferred to be arranged elsewhere if at all), e.g. valve 125 being a distribution valve for distributing liquids from (a liquid duct 138 from) the cleaning station CS and valves 127 being 3-way valves for selectively pairwise connecting distribution valve 125, liquid conduit 105 and liquid connector 128 for connecting the module 123 to the sample holder station SHS. The manifold module 123 may also be used for controllably moving an amount of liquid from one or more of the microcontainers 103 into and/or through a reservoir (not shown) and/or a sample holder such as a microfluidic chip 129in the sample holder station SHS.

The cleaning station CS comprises a distribution module 131 for controllably moving amounts of liquids from one or more reservoirs 133A, 133B, 133C, 133D to the microcontainer 103 (or rather: one or more of the microcontainers), in the shown system 100: via the manifold module 123. Further, a pressure module 135 is provided for controllably pressurising one or more of the reservoirs 133A, 133B, 133C, 133D and/or one or more of the microcontainer(s) 103 via pressure conduits 120, 136A, 136B, using one or more pressure valves 137A, 137B; pressurisation of one or more microcontainers 103 may be controlled collectively and/or individually. The pressure module 135 may, e.g., comprise, for applying the gas pressure, one or more controllable pressure valves 137A, 137B, and/or one or more gas pressure distribution valves may be arranged in the manifold module 123 (not shown). The pressure module 135 may be provided with a gas supply comprising one or more bottled gases and/or compressed air (fraction) for which a compressor may be provided as indicated.

The sample holder station SHS may be provided with one or more flow cells 129 and/or or other sample holders. The sample holder station SHS may be provided with further devices for studying and/or manipulating one or more sample portions, e.g. objects or molecules entrained in a sample fluid and/or affected by sample fluid from a microcontainer 103. Typical sample objects or molecules may be biological objects such as cellular objects or biological molecules such as proteins, DNA molecules, coated beads for optical trapping etc. RNA molecules, polypeptides, peptides, enzymes, to name just a few. Devices for studying may comprise one or more trapping devices such as optical tweezers, magnetic tweezers, acoustic levitation devices, microfluidic laminar flow manipulation devices, optical detection systems such as microscopic devices, cameras, (laser) light sources etc..

The system 100 may comprise one or more flow sensors 139 for controlling liquid flow in the system 100 in specific locations.

The waste station WS may comprise a valve 141 and a waste container 143 or other device such as detection systems.

In use, the system 100 may be controlled to perform one or more of the following steps:
A - Providing one or more microcontainers 103 and arranging it/them in the microcontainer holder 101; for one or more of the microcontainers 103, optionally, the lid 103C may be arranged in the holder 117 and/or the detector 119 may check for presence and/or correct placement of (one or more parts of) the microcontainer 103 in the holder 101.
B - One or more of the microcontainers 103 may contain initially a sample portion prior to arranging the microcontainer 103 in the holder 101.
C - Arranging the microcontainer holder 101 holding the one or more microcontainers 103 in the filling station FS of the system 100; optionally the temperature of one or more of the microcontainers 103 may be controlled (e.g. cooled to preserve proteins or heated to 37 degrees to promote biological activity).
D - Positioning the microcontainer holder 101 and the manifold module 123 such that each liquid conduit 105 is arranged in a microcontainer 103, preferably such that the liquid conduit 105 or at least the electrode 109 thereof is coaxial with the microcontainer 103 (see common axis A indicated in Fig. 5). The electrode 109 forms a first, inner, electrode and the holder 101 forms a second, outer, electrode 111 to the microcontainer 103.
   In case a liquid conduit 105 is arranged in a holder position (e.g. a recess 115) not containing a microcontainer 103, a warning signal may be provided and/or the manifold may be controlled (e.g. by controller module C100) to restrict operation to (holding positions containing) present microcontainers 103.
E - A first liquid from a first reservoir (133A, 133B, 133C or 133D) may be provided into one or more selected microcontainers 103, e.g. by pressurising the respective reservoir by the pressure module 135 and controlling one or more appropriate valves in the distribution module 131 and in the manifold module 123 associated with the controller and the selected microcontainers 103, respectively. Flow of the liquid may be determined by a flow sensor 139.

The first liquid may be a cleaning and/or buffer liquid (e.g. a buffer liquid from reservoir 133C), with which at least parts of the system 100 may be cleaned and/or primed.
F - Prior to and/or during and/or after filling an amount of liquid into the microcontainer 103, one or more electrical capacitance values are determined between the respective first and second electrodes 109, 111; and a liquid level in the microcontainer 103 and/or a variation of a liquid level in the microcontainer 103 is determined based on the one or more determined electrical capacitance values.
G - After reaching a desired liquid level in the microcontainer 103, liquid from the microcontainer may be moved to (e.g. flown through) the sample holder 129; this may be controlled by controlling a gas pressure in the microcontainer 103 by the pressure module 135, e.g. using valve 137B.

As the first liquid may be a buffer liquid, the sample holder and any associated features of the system 100 may thus be primed for subsequent sample processing such as experiments, e.g. comprising one or more of filling liquid channels, wetting surfaces, flushing out bubbles, adjusting a pH, thermalization, setting sensor values etc.

The flow from the microcontainer may, at least partly, be controlled by monitoring the liquid level in the microcontainer by repeatedly and/or continuously determining the electrical capacitance values. During this, the flow from the reservoir may be stopped or at least partly maintained; since simultaneous flow may not be desired it may be made impossible, e.g. by providing one or more valves 127 as two- or three wave valve(s) restricting flow options.
H - The microcontainer 103 may be exchanged for a further microcontainer 103 (see steps A-D), which may contain a different sample portion. The sample portion may be moved to (e.g. flown through) the sample holder 129, similar to step G. Thus, the sample holder may be provided with sample material.
I - A second liquid from a second reservoir (133A, 133B, 133C or 133D) may be provided into one or more selected microcontainers 103, as in one or more of steps E-G, e.g. by pressurising the respective reservoir by the pressure module 135 and controlling one or more appropriate valves in the distribution module 131 and in the manifold module 123 associated with the reservoir and the selected microcontainers 103, respectively.

Such liquid flow may however also bypass the microcontainer 103 and flow directly through the sample holder 129 and/or such liquid flow may bypass the sample holder 129 and flow directly to the waste station WS.

J - Any of the steps E-I may be repeated one or more times as appropriate for a desired sample processing method associated with the sample holder 129.

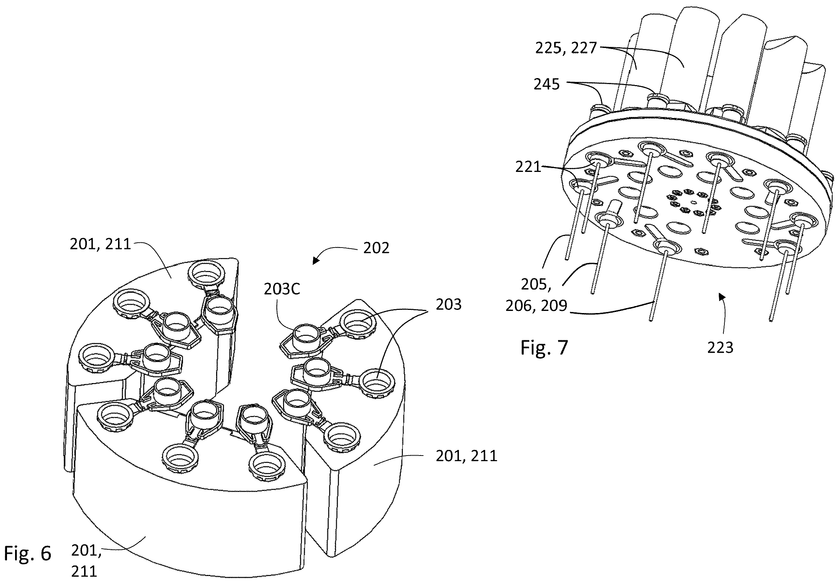

Figs. 6-9 show different views of parts of an exemplary embodiment of a system for use with plural microcontainers.

Figs. 6, 8 and 9 show parts of a microcontainer holder assembly 202 comprising three microcontainer holders 201, each configured for holding three microcontainers 203. The holders 201 may comprise, e.g. being at least partly formed of, (possibly anodised) aluminium, stainless steel, gold or similar conductor suitable for use as an electrode 211 in vicinity of (bio-) chemical materials. Also or alternatively a conductor may be provided with an insulating coating Each holder 201 may be provided with an electrical connector (not shown).

Figs. 7-9 show parts of a manifold module 223 mated to the microcontainer holder assembly 202 and comprising electrically conductive hollow needles 206, connected to a substrate supporting valve assemblies comprising controllable valves 225, 227, as liquid conduits. Each needle 206 is electrically connected with an electrical connector 245; one or more needles may be associated with a single connector which may be a multiconductor connector. Seals 221 are arranged about the needles 206. Thus, each needle 206 provides a liquid conduit 205 and serves as (first) electrode 209.

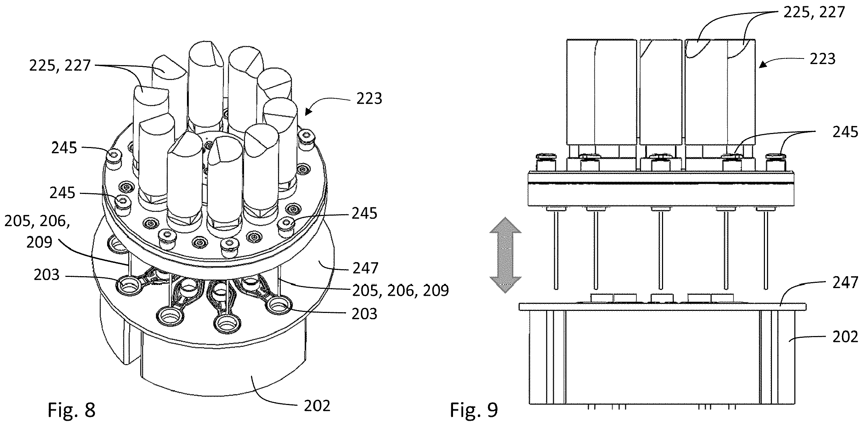

In Figs. 8-9 also shows an optional circuit board 247 with which the microcontainer holder assembly 202 and manifold module 223 are further provided.

The manifold module 223 is mated to the microcontainer holder assembly 202 so that they (201, 223) may be moved relative to each other and each needle 206 and seal 221 may be operably arranged in and/or on an associated microcontainer 203 in the holder assembly 201, as indicated in Figs. 8-9. Thus the needles 206 and holders 201 may serve as first and second electrodes for determining capacitance values as disclosed herein elsewhere.

The circuit board 247 may be provided with electrical devices like microcontainer detectors, temperature sensors, leak detectors, etc. and associated electrical conductors (none shown). The manifold module 223 and/or circuit board 247 may further serve for holding lids 203C of microcontainers 203 and/or otherwise securing the microcontainers 203 in the holder 201. Also or alternatively, the circuit board and one or more of the microcontainer modules 201 may comprise mated electrical connectors for electrically connecting them, e.g. for assisting one or more of capacitance determination, microcontainer detection and/or -identification, and for establishing a common electrical ground.

The disclosure is not restricted to the above described embodiments which can be varied in a number of ways within the scope of the claims.

Various embodiments may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state nonvolatile semielectrode memory) on which information is permanently stored; and (ii) writable storage media (e.g., flash memory, floppy disks within a diskette drive or hard-disk drive or any type of solid-state random-access semielectrode memory) on which alterable information is stored.

Elements and aspects discussed for or in relation with a particular embodiment may be suitably combined with elements and aspects of other embodiments, unless explicitly stated otherwise.

## Claims

1. Method for liquid manipulation comprising:
providing a microcontainer (3, 103, 203) for holding an amount of liquid (7), such as a test tube or an Eppendorf tube;
providing an amount of liquid (7) in the microcontainer via a liquid conduit (5, 105, 205) arranged in the microcontainer (3, 103, 203), wherein the liquid conduit (5, 105, 205) comprises a first electrode (9, 109, 209) forming an inner electrode;
providing the microcontainer (3, 103, 203) with a second electrode (11, 111, 211) forming an outer electrode laterally adjacent to the microcontainer (3, 103, 203);
wherein the method further comprises determining one or more electrical capacitance values (C_{T}) between the first and second electrodes (9, 109, 209; 11, 111, 211); and
determining a liquid level (L) in the microcontainer (3, 103) and/or a variation of a liquid level (L) in the microcontainer (3, 103. 203) based on the one or more determined electrical capacitance values (C_{T}).

2. Method according to claim 1, comprising immersing at least part of the first electrode (9, 109, 209) in the amount of liquid (7).

3. Method according to any of the preceding claims, comprising controlling a liquid level (L) and/or a variation of a liquid level (L) in the microcontainer (3, 103, 203) on the basis of the one or more electrical capacitance values (C_{T}).

4. Method according to any of the preceding claims, wherein varying the amount of liquid (7) in the microcontainer (3, 103, 203) comprises controlling a gas pressure in the microcontainer (3, 103, 203).

5. Method according to any of the preceding claims, wherein the method further comprises one or more of:
arranging the first electrode (9, 109, 209) in the microcontainer (3, 103, 203) substantially equidistant from opposing microcontainer wall portions and/or opposing second electrode portions;
arranging the second electrode (11, 111, 211) around the microcontainer (3, 103, 203), preferably such that the second electrode (11, 111, 211) fully encircles the microcontainer (3, 103, 203); and
arranging the first electrode (9, 109, 209) in the microcontainer (3, 103, 203) substantially coaxial with at least one of the second electrode (11, 111, 211) and the microcontainer (3, 103, 203), the first electrode (9, 109, 209) extending along a first electrode axis (A_{F}), the microcontainer extending along a microcontainer axis (A_{M}), and the second electrode (11, 111, 211) extending along a second electrode axis (As).

6. Method according to any of the preceding claims, wherein the method further comprises determining the presence of the microcontainer and/or one or more properties of the microcontainer (3, 103, 203).

7. Method according to any one of the preceding claims, wherein the method further comprises:
providing a sample holder (129) such as a microfluidic chip,
providing one or more amounts of liquid to the sample holder (129), possibly comprising flowing one or more amounts of liquid through the sample holder (129),
wherein at least one of the one or more amounts of liquid is provided from the microcontainer (3, 103, 203) via the conduit (5, 105, 205).

8. Liquid manipulation system (100) for the method according to any one of the preceding claims, comprising
A microcontainer holder (101, 201) for holding a microcontainer (3, 103, 203) for holding an amount of liquid (7), such as a test tube or an Eppendorf tube;
a liquid conduit (5, 105, 205) for varying an amount of liquid in a microcontainer, in particular a pipette and/or a needle allowing the passage of a liquid via the conduit (5, 105, 205), wherein the liquid conduit comprises a first electrode (9, 109, 209);
a second electrode (11, 111, 211), preferably arranged in or on the microcontainer holder (101, 102);
the system being configured to arrange the liquid conduit (5, 105) in a microcontainer (3, 103, 203) held in the microcontainer holder (101, 201), and the second electrode (11, 111, 211) laterally adjacent to the microcontainer (3, 103, 203), the first and second electrodes (9, 109, 209; 11, 111, 211) forming an inner electrode (9, 109, 209) and, respectively, an outer electrode (11, 111, 211) at a predetermined relative position;
the system (100) further comprising a controller module (C100) configured to determine one or more electrical capacitance values (C_{T}) between the first and second electrodes (9, 109, 209; 11, 111, 211) in at least the predetermined relative position; and
wherein the system (100) is configured to determine a liquid level (L) in the microcontainer (3, 103, 203) and/or a variation of the liquid level (L) in the microcontainer (3, 103, 203) based on the one or more determined electrical capacitance values (C_{T}).

9. Liquid manipulation system (100) according to claim 8, wherein the liquid manipulation system is configured to vary an amount of liquid (7) in the microcontainer (3, 103, 203), in particular comprising fluid manipulation devices such as one or more conduits (138), valves (125, 127), pumps, and possibly a controller (C100) for controlling one or more of the one or more valves and/or pumps.

10. Liquid manipulation system (100) according to any one of claims 8-9, wherein at least part of the first electrode (9, 109, 209) is configured to be immersed in an amount of liquid (L) in the microcontainer (3, 103, 203).

11. Liquid manipulation system (100) according to any one of the claims 8-10, wherein at least one of
the second electrode (11, 111, 211) is arranged in or on the microcontainer holder (101, 201) to encircle the microcontainer (3, 103, 203) at least partly and preferably substantially fully,
the liquid manipulation system (100) is configured to position at least part of the first electrode (9, 109, 209) in the microcontainer (3, 103, 203) substantially equidistantly from opposing microcontainer wall portions and/or from opposing second electrode portions, and
the liquid manipulation system (100) is configured to position at least part of the first electrode (9, 109, 209) in the microcontainer (3, 103, 203) substantially coaxial with at least one of the second electrode (11, 111, 211) and the microcontainer (3, 103, 203), the first electrode (9, 109, 209) extending along a first electrode axis (A_{F}), the microcontainer (3, 103, 203) extending along a microcontainer axis (A_{M}), and the second electrode (11, 111, 211) extending along a second electrode axis (As).

12. Liquid manipulation system (100) according to any one of the claims 8-11, wherein the liquid manipulation system further comprises one or more of:
a seal (121) for sealing the microcontainer (3, 103, 203);
a pressure manipulation module (135) configured to adjust a pressure in the microcontainer (3, 103, 203) for varying an amount of liquid (L) in the microcontainer (3, 103, 203), e.g. adding and/or removing one or more amounts of one or more liquids to/from the microcontainer;
a temperature control module (120) for controlling a temperature of at least some of the one or more microcontainers (3, 103, 203) and/or the microcontainer holder (101, 201).

13. Liquid manipulation system (100) according to any of the claims 8-12, wherein the liquid manipulation system comprises a detector (119) for determining presence and/or one or more properties of the microcontainer (3, 103, 203) in the holder (101, 201).

14. Liquid manipulation system (100) according to any one of the claims 8-13, wherein the liquid manipulation system (100) further comprises a controllable manifold module (123, 223) for controllably moving an amount of liquid from the microcontainer (3, 103, 203) into and/or through a reservoir and/or a sample holder such as a microfluidic chip (129).

15. Liquid manipulation system (100) according to any one of claims 8-14, and further comprising at least one of a cleaning station (CS), a waste station (WS), and a sample holder station (SHS) which may be provided with a sample object manipulation and/or detection system.
